# EUROPÄISCHE PATENTANMELDUNG

(11) **EP 2 515 191 A2**
(43) Veröffentlichungstag der Anmeldung: **24.10.2012**
(21) Anmeldenummer: 12161797.1
(22) Anmeldetag: 28.03.2012
(51) Int. Cl.: G05B 19/401, B25J 9/10, B25J 9/16

(54) **Maschine mit relativ zueinander drehbaren Gliedern**

(30) Priorität: 18.04.2011 DE 102011007609
(71) Anmelder: KUKA Roboter GmbH, 86165 Augsburg (DE)
(72) Erfinder: Nitz, Gernot, 86163 Augsburg (DE); Roth, Stefan, 86485 Eisenbrechtshofen (DE); Tscharnuter, Dietmar, 86316 Friedberg (DE)
(74) Vertreter: Patentanwälte Funk & Böss GbR

(57) **Zusammenfassung**

Die Erfindung betrifft eine Maschine (R), die ein erstes Glied (1c), ein relativ zum ersten Glied (1c) bezüglich einer Achse (A) drehbares zweites Glied (1c), eine Steuervorrichtung (S), einen mit der Steuervorrichtung (S) verbundenen Antrieb zum Bewegen der beiden Glieder (1c, 1d) relativ zueinander, und einen mit der Steuervorrichtung (S) verbundenen und am ersten Glied (1c) angeordneten ersten Hallsensor (21) aufweist. Am zweiten Glied (1d) sind ein erster, zweiter und dritter Magnet (31-33) auf einer gemeinsamen Kreisbahn (14) derart nebeneinander angeordnet, dass bei einer Drehung der beiden Glieder (1c, 1d) relativ zueinander der erste Hallsensor (21) sich bei einer bestimmten Position (P) im Wirkbereich der Magnete (31-33) befindet. Der als mittlere Magnet ausgebildete zweite Magnet (32) ist mit einem anderen magnetischen Pol dem ersten Hallsensor (21) zugewandt als der erste und dritte Magnet (31, 33).

## Beschreibung

Die Erfindung betrifft eine Maschine mit relativ zueinander drehbaren Gliedern.

Ein Beispiel einer Maschine mit einem relativ zueinander drehbaren Glied ist ein Roboter. Roboter im Allgemeinen sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Roboter weisen üblicherweise einen Roboterarm mit mehreren Gliedern und programmierbare Steuerungen (Steuervorrichtungen) auf, die während des Betriebs die Bewegungsabläufe des Roboterarms steuern bzw. regeln. Die Antriebe sind z.B. elektrische Antriebe und die Glieder sind relativ zueinander bezüglich Achsen drehbar gelagert.

Die EP 1 288 756 B1 offenbart ein Verfahren zum Erzeugen von Referenzdaten, mit denen die Relativposition eines bewegbaren Teils eines programmgesteuerten mehrachsig bewegbaren Roboters in Bezug auf ein anderes Teil bestimmt wird. An einem der Teile ist ein Permanentmagnet und am anderen Teil sind wenigstens zwei Hall-Generatoren angeordnet, deren Ausgangsspannungen sich beim Annähern an den Permanentenmagneten ändern. Mittels Auswertens der sich ändernden Ausgangsspannungen wird die Relativposition der beiden Teile relativ zueinander bestimmt.

Die Aufgabe der Erfindung ist es, eine Maschine mit relativ zueinander drehbaren Gliedern anzugeben, welche eingerichtet ist, eine Referenzposition der beiden Glieder relativ zueinander verbessert zu bestimmen.

Die Aufgabe der Erfindung wird gelöst durch eine Maschine, aufweisend ein erstes Glied, ein relativ zum ersten Glied bezüglich einer Achse drehbares zweites Glied, eine Steuervorrichtung, einen mit der Steuervorrichtung verbundenen Antrieb zum Bewegen der beiden Glieder relativ zueinander, einen mit der Steuervorrichtung verbundenen und am ersten Glied angeordneten ersten Hallsensor, und einen ersten, zweiten und dritten Magneten, die nebeneinander derart am zweiten Glied auf einer gemeinsamen Kreisbahn angeordnet sind, dass bei einer Drehung der beiden Glieder relativ zueinander der erste Hallsensor sich bei einer bestimmten Position im Wirkbereich der Magnete befindet, wobei der als mittlere Magnet ausgebildete zweite Magnet mit einem anderen magnetischen Pol dem ersten Halssensor zugewandt ist als der erste und dritte Magnet.

Im Betrieb der erfindungsgemäßen Maschine, die z.B. als Roboter mit einem Roboterarm ausgebildet ist, erzeugt der erste Hallsensor ein Signal, das insbesondere ein elektrisches Signal, beispielsweise ein elektrischer Strom oder eine elektrische Spannung ist. Befindet sich der erste Hallsensor im Bereich eines Magnetfeldes, dann ändert sich das vom ersten Hallsensor erzeugte Signal. Da nun erfindungsgemäß für das Erkennen der bestimmten Position nicht nur ein Magnet vorgesehen ist, sondern die drei auf einer gemeinsamen Kreisbahn nebeneinander angeordneten Magnete, die außerdem derart ausgerichtet sind, dass der mittlere Magnet mit einem anderen Pol dem ersten Hallsensor zugewandt ist, wenn dieser sich in dessen Wirkbereich befindet, als die beiden anderen Magnete, ergibt sich eine deutlichere Änderung des Signals des ersten Hallsensors, wenn dieser in den Wirkbereich des mittleren bzw. zweiten Magneten gerät. Die bestimmte Position ist insbesondere eine Referenzposition. Dadurch wird es ermöglicht, dass der erste Hallsensor diesen Magneten verbessert detektiert, wodurch es ermöglicht wird, die Referenzposition verbessert zu ermitteln.

Beispielsweise können der zweite Magnet mit seinem Nordpol und der erste und dritte Magnet mit ihren Südpolen dem ersten Hallsensor zugewandt sein. Liegt z.B. am ersten Hallsensor eine positive Versorgungsspannung an, dann reduziert sich zunächst das vom ersten Hallsensor erzeugte Signal, wenn dieser in den Wirkbereich des ersten oder dritten Magneten gerät, um dann deutlich zu steigen, wenn der erste Hallsensor in den Wirkbereich des zweiten Magneten gerät. Dadurch kann der zweite Magnet, wie bereits erwähnt, verbessert detektiert werden.

Die Steuervorrichtung der erfindungsgemäßen Maschine kann vorzugsweise eingerichtet sein, im Rahmen einer Referenzfahrt den Antrieb derart anzusteuern, sodass sich die beiden Glieder relativ zueinander drehen, und aufgrund der von dem ersten Hallsensor stammenden Signale die Referenzposition zu bestimmen. Um die beiden Glieder relativ zueinender zu justieren bzw. die Achse zu justieren, d.h. um die Referenzposition zu ermitteln, können im Rahmen der sogenannten Referenzfahrt die beiden Glieder relativ zueinender bezüglich der Achse gedreht werden, insbesondere gesteuert durch die Steuervorrichtung. Aufgrund des Signals des ersten Hallsensors wird es dann der Steuervorrichtung mittels einer Auswertung des Signals erlaubt, auf die Position des zweiten Magneten zu schließen, um die Referenzposition zu bestimmen.

Die Polaritäten des ersten, zweiten und dritten Magneten können derart gewählt sein, dass nach einer Ausführungsform der erfindungsgemäßen Maschine die Größe des Signals des ersten Hallsensors sich erhöht und somit eine steigende Signalflanke aufweist, sobald der erste Hallsensor in den Wirkbereich des zweiten Magneten gerät, und die Größe des Signals des ersten Hallsensors sinkt und somit eine fallende Signalflanke aufweist, sobald der erste Hallsensor den Wirkbereich des zweiten Magneten wieder verlässt. Um dies zu erreichen, kann z.B. an dem ersten Hallsensor eine positive Versorgungsspannung anliegen und der mittlere, also der zweite Magnet mit seinem Nordpol dem ersten Hallsensor zugewandt sein.

Die Polaritäten des ersten, zweiten und dritten Magneten können derart gewählt sein, dass die Größe des Signals des ersten Hallsensors sinkt und somit eine fallende Signalflanke aufweist, sobald der erste Hallsensor in den Wirkbereich des zweiten Magneten gerät, und die Größe des Signals des ersten Hallsensors steigt und somit eine steigende Signalflanke aufweist, sobald der erste Hallsensor den Wirkbereich des zweiten Magneten wieder verlässt.

Nach einer bevorzugten Variante der erfindungsgemäßen Maschine ist deren Steuervorrichtung eingerichtet, für die Bestimmung der Referenzposition die steigende und die fallende Signalflanke des Signals des ersten Hallsensors auszuwerten. Insbesondere kann die Steuervorrichtung eingerichtet sein, den Zeitpunkt zu erkennen, wenn die Größe der steigenden Signalflanke einen vorgegebenen Schwellenwert überschreitet und den Zeitpunkt zu erkennen, wenn die Größe der fallenden Signalflanke den vorgegebenen Schwellenwert unterschreitet. Dann ist es möglich, dass die Steuervorrichtung den Mittelwert dieser beiden Zeitpunkte ermittelt, um aufgrund des Mittelswertes auf die Referenzposition zu schließen. Aufgrund dieser Ausgestaltung ist ein Einfluss eines sich verändernden ersten Hallsensors, dessen Signal z.B. aufgrund von Alterungsprozessen sinkt, geringer, als wenn nur ein Schwellenwert für das Detektieren des Magneten verwendet wird.

Die erfindungsgemäße Maschine ist vorzugsweise als ein Roboter ausgebildet, der einen Roboterarm mit mehreren, nacheinander angeordneten Gliedern aufweist, die gesteuert durch die Steuervorrichtung mittels Antriebe relativ zueinander bezüglich Achsen drehbar sind. Zumindest zwei dieser Glieder sind mit dem ersten Hallsensor bzw. mit dem ersten, zweiten und dritten Magneten versehen, um deren Referenzposition zu bestimmen.

Gemäß einer bevorzugten Ausführungsform der als Roboter ausgeführten erfindungsgemäßen Maschine sind zumindest zwei dieser Achsen jeweils ein erster Hallsensor und jeweils ein erster, zweiter, und dritter Magnet zugeordnet, die an entsprechenden, den fraglichen Achsen zugeordneten Gliedern angeordnet sind, wobei die ersten Hallsensoren an einer gemeinsamen Leitung angeschlossen sind, an der die von den ersten Hallsensoren erzeugten Signale anliegen. Dadurch kann der Aufwand für eine Verkabelung der ersten Hallsensoren verringert werden.

Um beispielsweise zu erreichen, dass die Signale der einzelnen ersten Hallsensoren sich nicht oder zumindest weniger stark beeinflussen, können elektrische Ventile, insbesondere Dioden vorgesehen sein, von denen jeweils eines insbesondere in Durchlassrichtung zwischen den einzelnen erstens Hallsensoren und der gemeinsamen Leitung geschaltet ist. Die Dioden sind insbesondere Schottky-Dioden.

Um die einzelnen Achsen bzw. Glieder verbessert zu justieren, ist nach einer Ausführungsform der als Roboter ausgeführten Maschine die Steuervorrichtung eingerichtet, zumindest diejenigen Glieder, deren Referenzpositionen die Steuervorrichtung aktuell nicht ermittelt, derart zu bewegen, sodass sich die entsprechenden ersten Hallsensoren im Wirkbereich ihrer jeweiligen ersten oder dritten Magnete befinden, und anschließend im Rahmen einer Referenzfahrt diejenigen Glieder relativ zueinander zu drehen, deren zugeordnete Referenzposition bestimmt werden soll, und aufgrund der von dem fraglichen ersten Hallsensor stammenden Signale die entsprechende Referenzposition zu bestimmen. Liegen beispielsweise an den ersten Hallsensoren eine positive Versorgungsspannung an, sind die mittleren, also die entsprechenden zweiten Magnete mit ihren Nordpolen ihren ersten Hallsensoren zugewandt, dann ist es möglich, dass diejenigen ersten Hallsensoren, die aktuell nicht für eine Justage herangezogen werden, ein relativ niedrige Spannung als Signal erzeugen, wenn sie sich im Wirkbereich der jeweiligen ersten oder dritten Magneten befinden, sodass an der gemeinsamen Leitung im Wesentlichen lediglich das Signal desjenigen ersten Hallsensors anliegt, der für die Bestimmung der aktuellen Referenzposition verwendet wird.

Ein weiterer Aspekt der Erfindung betrifft eine Maschine, aufweisend ein erstes Glied, ein relativ zum ersten Glied bezüglich einer Achse drehbares zweites Glied, eine Steuervorrichtung, einen mit der Steuervorrichtung verbundenen Antrieb zum Bewegen der beiden Glieder relativ zueinander, wenigstens einen mit der Steuervorrichtung verbundenen und am ersten Glied angeordneten, berührungslosen Sensor, welcher bei einer maximal vorgegebenen Relativdrehung der beiden Glieder ein für die Steuervorrichtung bestimmtes Signal erzeugt. Diese erfindungsgemäße Maschine, die vorzugsweise als ein Roboter mit einem Roboterarm ausgebildet ist, kann auch den ersten Hallsensor und den ersten, zweiten und dritten Magneten aufweisen, sodass diese Maschine auch die Referenzposition des fraglichen Glieds bestimmen kann. Der berührungslose Sensor ist insbesondere ein zweiter Hallsensor.

Die Steuervorrichtung kann dann eingerichtet sein, die vom berührungslosen Sensor stammenden Signale auszuwerten und aufgrund der ausgewerteten Signale die Relativbewegung der beiden Glieder zu stoppen. Mittels des berührungslosen Sensors kann demnach ein berührungsloser Endanschlag realisiert werden.

Nach einer Ausführungsform der erfindungsgemäßen Maschine kann diese einen vierten Magneten aufweisen, der derart am zweiten Glied angeordnet ist, dass bei einer Drehung in einer ersten Drehrichtung der beiden Glieder relativ zueinander der zweite Hallsensor sich bei einer ersten maximal erlaubten Relativbewegung der beiden Glieder im Wirkbereich des vierten Magneten befindet, und aufweisend einen fünften Magneten, der derart am zweiten Glied angeordnet, sodass bei einer Drehung in einer der ersten Drehrichtung entgegen gesetzten Drehrichtung der beiden Glieder relativ zueinander der zweite Hallsensor oder ein, am ersten Glied und mit der Steuervorrichtung verbundener weiterer Hallsensor sich bei einer zweiten maximal erlaubten Relativbewegung der beiden Glieder im Wirkbereich des fünften Magneten befindet.

Vorzugsweise ist der vierte Magnet, wenn er sich im Wirkbereich des zweiten Hallsensors befindet, mit einem anderen magnetischen Pol dem zweiten Halssensor zugewandt als der fünfte Magnet.

Gemäß einer weiteren Ausführungsform der erfindungsgemäßen Maschine weist diese einen weiteren Magneten auf, der derart am zweiten Glied angeordneten ist, dass bei einer Drehung der beiden Glieder relativ zueinander der weitere Hallsensor sich bei einer bestimmten Referenzposition im Wirkbereich des weiteren Magneten befindet und die Steuervorrichtung eingerichtet ist, im Rahmen einer Referenzfahrt den Antrieb derart anzusteuern, sodass sich die beiden Glieder relativ zueinander drehen und aufgrund der von dem weiteren Hallsensor stammenden Signale die Referenzposition zu bestimmen. Somit wird gemäß dieser Variante eine integrierte Justier- und Überwachungsvorrichtung realisiert, die den weiteren, den vierte und den fünften Magneten, sowie den weiteren und zweiten Hallsensor umfasst. Des Weiteren kann insbesondere der weitere Hallsensor der erste Hallsensor sein, sodass die Funktionalität der Überwachung der maximal erlaubten Relativdrehung und das Bestimmen der Referenzposition durch eine gemeinsame Justier- und Überwachungsvorrichtung realisiert wird, die den ersten, zweiten, dritten, vierten und fünften Magneten sowie den ersten und zweiten Hallsensor umfasst.

Nach einer bevorzugten Variante der erfindungsgemäßen Maschine sind alle Magnete auf derselben Kreisbahn am zweiten Glied angeordnet. Je nach Ausführungsform sind z.B. der erste, zweite, dritte, vierte und fünfte Magnet auf derselben Kreisbahn angeordnet, oder der vierte und fünfte Magnet sowie der weitere Magnet.

Ausführungsbeispiele der Erfindung sind exemplarisch in den beigefügten schematischen Zeichnungen dargestellt. Es zeigen:
- Fig. 1: einen Roboter mit einem Roboterarm und einer Steuervorrichtung,
- Fig. 2: zwei Glieder des Roboterarms in einer Seitenansicht, welche mit einer Justier- und Überwachungsvorrichtung versehen sind,
- Fig. 3: Komponenten der Justier- und Überwachungsvorrichtung,
- Fig. 4: ein Ausgangssignal eines Hallsensors der Justiervorrichtung,
- Fig. 5: eine der Justier- und Überwachungsvorrichtung der Fig. 4 zugeordnete Tabelle,
- Fig. 6: Komponenten einer weiteren Justier- und Überwachungsvorrichtung,
- Fig. 7: eine der Justier- und Überwachungsvorrichtung der Fig. 6 zugeordnete Tabelle,
- Fig. 8: Komponenten einer weiteren Justier- und Überwachungsvorrichtung,
- Fig. 9: eine der Justier- und Überwachungsvorrichtung der Fig. 8 zugeordnete Tabelle,
- Fig. 10: einen Hallsensor und einen Magneten,
- Figuren 11 und 12: Komponenten weiterer Justier- und Überwachungsvorrichtungen, und
- Fig. 13: eine elektrische Schaltung.

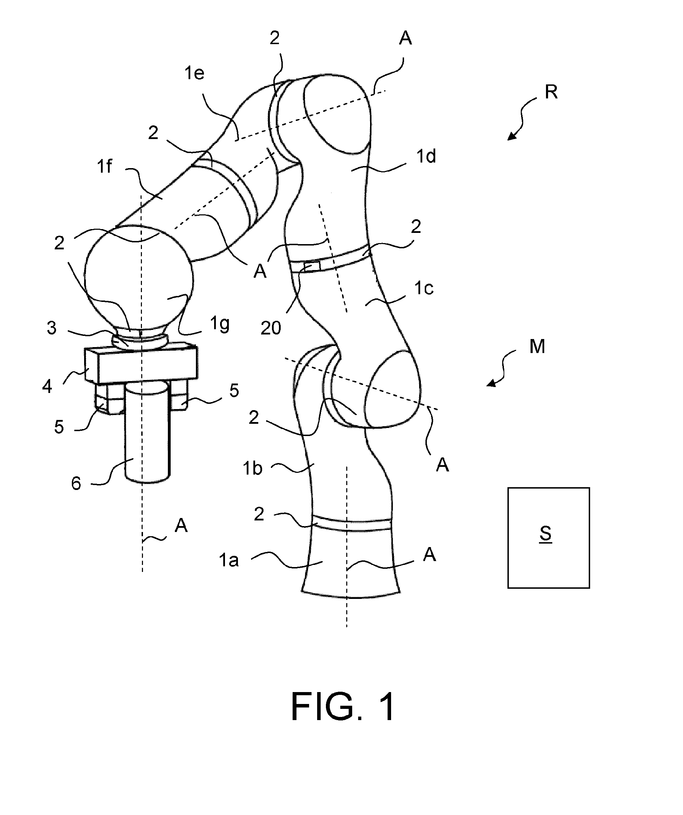

Die Fig. 1 zeigt einen Roboter R, der einen Roboterarm M und eine Steuervorrichtung S aufweist. Der Roboterarm M stellt im Wesentlichen den beweglichen Teil des Roboters R dar und umfasst mehrere, nacheinander folgende Glieder 1a-1g, die mittels Gelenke 2 miteinander verbunden sind. An einem seiner Enden weist der Roboterarm M eine Befestigungsvorrichtung 3 z.B. in Form eines Flansches auf, an dem z.B. ein Endeffektor in Form eines Greifers 4 befestigt werden kann. Der Greifer 4 weist z.B. Greifbacken 5 auf, mittels derer der Greifer 4 ein Objekt 6 halten kann, sodass dieses mittels des Roboters R bewegt werden kann.

Der Roboterarm M weist ferner mit der Steuervorrichtung S verbundene, nicht näher dargestellte Antriebe auf, mittels derer die Glieder 1 bezüglich den Gelenken 2 zugeordneten Achsen A relativ zueinander bewegt werden können.

Die Antriebe sind z.B. elektrische Antriebe und werden insbesondere im Automatikbetrieb des Roboters R von der Steuervorrichtung S angesteuert, sodass die Befestigungsvorrichtung 3 oder ein sogenannter Tool Center Point des Roboters R automatisch eine vorbestimmte Bewegung durchführt. Zu diesem Zweck läuft auf der Steuervorrichtung S ein entsprechendes Anwenderprogramm. Die Steuervorrichtung S kann insbesondere derart ausgeführt sein, dass sie im Automatikbetrieb die Antriebe regelt. Auch der Greifer 4 ist mit der Steuervorrichtung S verbunden, sodass diese ein Greifen und Loslassen des Objekts 6 steuern kann.

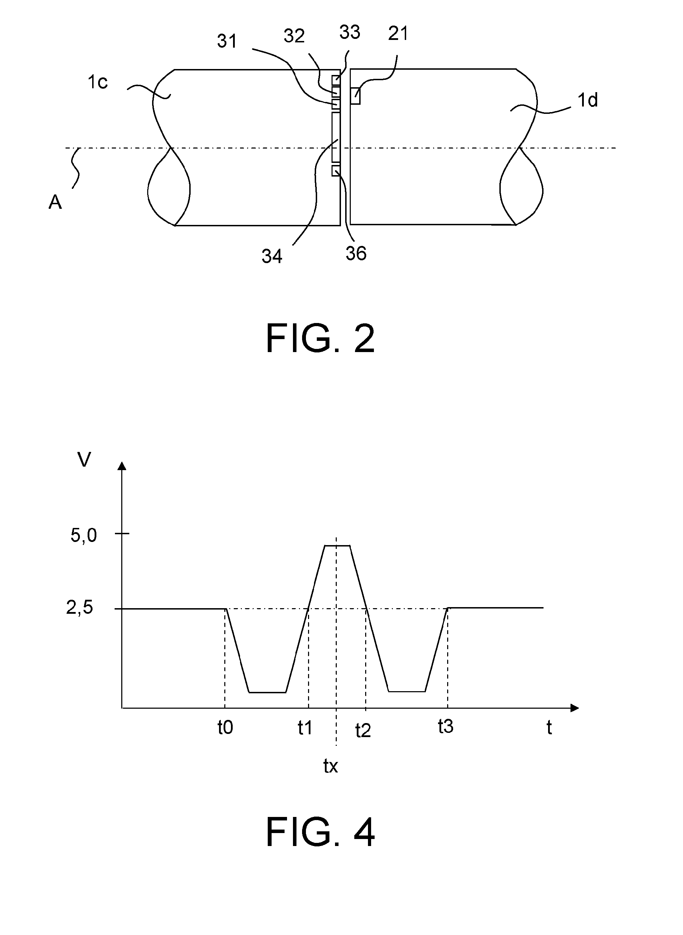

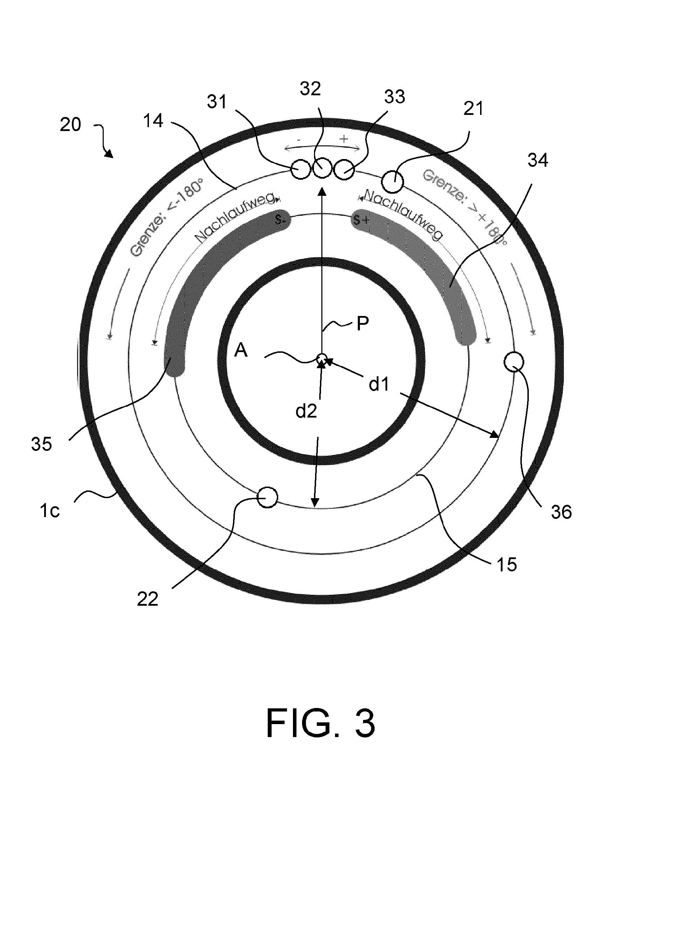

Im Falle des vorliegenden Ausführungsbeispiels weist der Roboter R bzw. der Roboterarm M eine der Achsen A zugeordnete Justier- und Überwachungsvorrichtung 20 auf. Vorzugsweise ist jeder der Achsen A eine Justier- und Überwachungsvorrichtung 20. Die wenigstens eine Justier- und Übervorrichtung 20 ist insbesondere in den Roboterarm M integriert und/oder erlaubt eine berührungslose Justage und Überwachung der fraglichen Achse A. Die Justier- und Überwachungsvorrichtung 20 ist in den Figuren 2 und 3 näher dargestellt und ist insbesondere mit der Steuervorrichtung S des Roboters R verbunden, sodass diese von der Justier- und Überwachungsvorrichtung 20 erzeugte Signale, die insbesondere elektrische Signale sind, auswerten kann. Die Justier- und Überwachungsvorrichtung 20 kann gegebenenfalls miteinander gekoppelt sein oder auch getrennt ausgeführt sein, d.h. als eine Justiervorrichtung und als eine von der Justiervorrichtung unabhängige Überwachungsvorrichtung.

Mittels der Justier- und Überwachungsvorrichtung 20 wird es dem Roboter R bzw. dessen Steuervorrichtung S einerseits ermöglicht, eine Referenzposition P der der Achse A zugeordneten Glieder 1c, d zu bestimmen, insbesondere einen Nullwinkel. Die Justier- und Überwachungsvorrichtung 20 ist andererseits auch vorgesehen, eine maximal vorgegebene Relativdrehung der beiden Glieder 1c, d zu erkennen, damit gegebenenfalls die Steuervorrichtung S eine weitere Bewegung der Glieder 1c, d relativ zueinander stoppt. Mittels der Justier- und Überwachungsvorrichtung 20 werden somit Endanschläge der Glieder 1c, d realisiert.

Im Falle des vorliegenden Ausführungsbeispiels weist die Justier- und Überwachungsvorrichtung 20 einen mit der Steuervorrichtung S verbundenen ersten Hallsensor 21 und einen mit der Steuervorrichtung S verbundenen zweiten Hallsensor 22 auf, die beide an demselben Glied 1c angeordnet sind und deshalb auch relativ zu diesem Glied 1c unbeweglich sind. Im Falle des vorliegenden Ausführungsbeispiels sind die beiden Hallsensoren 21, 22 in einem Winkel von 180° relativ zueinander am Glied 1d angeordnet, jedoch mit unterschiedlicher Abständen d1, d2 in radialer Richtung zur Achse A.

Die Justier- und Überwachungsvorrichtung 20 weist im Falle des vorliegenden Ausführungsbeispiels sechs Magnete, nämlich einen ersten Magnet 31, einen zweiten Magnet 32, einen dritten Magnet 33, eine vierten Magneten 34, eine fünften Magneten 35 und einen optionalen sechsten Magneten 36 auf, die alle am Glied 1c angeordnet sind, welches relativ zu dem Glied 1d bezüglich der Achse A drehbar ist, an der die beiden Hallsensoren 21, 21 angeordnet sind. Der erste, zweite dritte und sechste Magnet 31-33, 36 sind der Justierfunktionalität der Justier- und Überwachungsvorrichtung 20 zugeordnet und sind insbesondere auf einer gemeinsamen Kreisbahn 14 am Glied 1c angeordnet.

Der erste, zweite und dritte Magnet 31-33 und der erste Hallsensor 21 sind vorgesehen, die Referenzposition, insbesondere den Nullwinkel der beiden Glieder 1c, d relativ zueinander zu bestimmen. Um dies zu erreichen, wird z.B. im Rahmen einer sogenannten Referenzfahrt gesteuert durch die Steuervorrichtung S das Glied 1d relativ zum Glied 1c um die Achse A gedreht. Aufgrund der Magnete 31-33 ändert sich das elektrische Ausgangssignal des ersten Hallsensors 21, wenn dieser an den Magneten 31-33 vorbei bewegt wird. Das Ausgangssignal des ersten Hallsensors 21 ist insbesondere eine elektrische Spannung.

Der erste, zweite und dritte Magnet 31-33 sind relativ nahe beisammen und nebeneinander auf der gemeinsamen Kreisbahn 14 angeordnet und derart in Richtung des sich vorbeibewegenden ersten Hallsensors 21 ausgerichtet, sodass der mittlere Magnet, d.h. der zweite Magnet 32 mit einem anderen magnetischen Pol in Richtung auf den sich vorbei bewegenden ersten Hallsensor 21 zeigt als die beiden anderen Magnete, also der erste und der dritte Magnet 31, 33. Im Falle des vorliegenden Ausführungsbeispiels sind der erste und der dritte Magnet 31, 33 mit ihren Südpolen in Richtung sich vorbeibewegenden ersten Hallsensor 21 und der mittlere, also der zweite Magnet 32 mit seinem Nordpol in Richtung sich vorbei bewegenden ersten Hallsensor 21 ausgerichtet.

Im Falle des vorliegenden Ausführungsbeispiels betragen die Ausgangsspannungen der Hallsensors 21, 22 ca. 2,5V, solange kein magnetisches Feld auf den entsprechenden Hallsensor 21, 22 wirkt. Wird der erste bzw. zweite Hallsensor 21, 22 an einem Südpol vorbei bewegt bzw. befindet sich im Wirkbereich eines Südpols, sinkt dessen Ausgangsspannung auf ca. 0,2V. Wird der erste bzw. zweite Hallsensor 21, 22 an einem Nordpol vorbei bewegt bzw. befindet sich im Wirkbereich eines Nordpols, steigt dessen Ausgangsspannung auf ca. 4,8V. Aufgrund der Anordnung des ersten, zweiten und dritten Magneten 31-33 der Justier- und Überwachungsvorrichtung 20 ergibt sich im Falle des vorliegenden Ausführungsbeispiels ein in der Fig. 4 gezeigter elektrischer Spannungsverlauf der Ausgangspannung des ersten Hallsensors 21.

Beispielsweise bei einer Drehung des ersten Hallsensors 21 relativ zu den Magneten 31-33 im Uhrzeigersinn ist dieser zunächst keinem Magnetfeld ausgesetzt und weist eine Ausgangsspannung von etwa 2,5V auf. Zum Zeitpunkt t0 gerät der erste Hallsensor 21 zunächst in den magnetischen Wirkbereich des ersten Magneten 31, wodurch die Ausgangsspannung des ersten Hallsensors 21 auf ca. 0,2 V gedrückt wird. Nach einer Weile gerät der erste Hallsensor 21 in den Wirkbereich des mittleren, also den zweiten Magneten 32, wodurch die Ausgangsspannung des ersten Hallsensors 21 auf etwa 4,8V steigt und im Zeitpunkt t1 eine Schwelle von 2,5V übersteigt. Nach einer Weile gerät der erste Hallsensor 21 in den Wirkbereich des dritten Magneten 33, wodurch die Ausgangsspannung des ersten Hallsensors 21 wieder auf etwa 0,2V fällt und im Zeitpunkt t2 die Schwelle von 2,5V unterschreitet. Zum Zeitpunkt t3 verlässt der erste Hallsensor 21 den magnetischen Wirkbereich des dritten Magneten 33, wodurch die Ausgangsspannung des ersten Hallsensors 21 wieder etwa 2,5V erreicht.

Um nun die Referenzposition zu bestimmen, bestimmt die Steuervorrichtung S einen Zeitpunkt tx, der sich aus der Differenz zwischen den Zeiten t2 und t1 berechnet. Aufgrund des Zeitpunkts tx ist es daraufhin der Steuervorrichtung S möglich, auf die Referenzposition P zu schließen. Es wird somit zur Auswertung der Referenzposition P sowohl die steigende als auch die fallende Flanke des Ausgangssignals des ersten Hallsensors 21 heran gezogen. Somit sinkt auch die Gefahr eines Driftens der Justage aufgrund eines Alterns des ersten Hallsensors 21, aufgrund dessen dieser eine geringere Ausgangsspannung bzw. ein geringes Ausgangssignal liefert. Gegebenfalls kann noch eine Ausgleichsrechnung über relativ weite Bereiche der steigenden und fallenden Flanke des Ausgangssignals des ersten Hallsensors 21 durchgeführt werden.

Um die Funktionstüchtigkeit des ersten Hallsensors 21 zu überprüfen, kann die Referenzfahrt wiederholt werden, um die Ergebnisse beider Referenzfahrten zu überprüfen. Unterscheiden sich die ermittelten Referenzpositionen P um einen vorgegebenen Wert, so kann z.B. die Steuervorrichtung S eine entsprechende Warnung erzeugen. Auch der optionale sechste Magnet 36 der Justier- und Überwachungsvorrichtung 20, welcher im Falle des vorliegenden Ausführungsbeispiels in einem Winkel von 90° relativ zum zweiten Magneten 32 am Glied 1c und auf derselben Kreisbahn 14 angeordnet ist wie der erste, zweite und dritte Magnet 31-33, kann zur Überprüfung der Justier - und Überwachungsvorrichtung 20 heran gezogen werden. So kann es vorgesehen sein, dass während der Referenzfahrt die Steuervorrichtung S nur dann auf eine erfolgreiche Bestimmung der Referenzposition P schließt, wenn mittels des ersten Hallsensors 21 der sechste Magnet 36 in einem Winkel von 90° inklusive vorgegebener Toleranz relativ zum zweiten Magneten 32 detektiert wird (Justagereferenz).

Der vierte und fünften Magnet 34, 35 und der zweite Hallsensor 22 sind vorgesehen, den maximal erlaubten Drehbereich der beiden Glieder 1c, d relativ zueinander zu überwachen, damit die Steuervorrichtung S gegebenenfalls die Bewegung der Glieder 1c, d relativ zueinander stoppt. Im Falle des vorliegenden Ausführungsbeispiels ist der Drehbereich auf größer 360° beschränkt, also auf größer als ±180° bezogen auf die Referenzposition P.

Der vierte und fünfte Magnet 34, 35 der Justier- und Überwachungsvorrichtung 20 sind am Glied 1d angeordnete und liegen auf einer gemeinsamen Kreisbahn 15.

Im Falle des vorliegenden Ausführungsbeispiels sind der vierte und fünfte Magnet 34, 35 der Justier- und Überwachungsvorrichtung 20 in tangentialer Richtung direkt neben dem ersten, zweiten und dritten Magneten 31-33 der Justier- und Überwachungsvorrichtung 20 angeordnet. Im Falle des vorliegenden Ausführungsbeispiels sind der vierte und fünfte Magnet 34, 35 derart am Glied 1c angeordnet, sodass der vierte Magnet 34 mit einem anderen magnetischen Pol in Richtung auf den sich vorbei bewegenden zweiten Hallsensor 22 zeigt als der fünfte Magnet 35. Insbesondere sind der vierte und fünfte Magnet 34, 35 derart am Glied 1c angeordnet, sodass der vierte Magnet 34 mit seinem Südpol und der fünfte Magnet 35 mit seinem Nordpol in Richtung auf den sich vorbei bewegenden zweiten Hallsensor 22 zeigt.

Dreht sich im Falle des vorliegenden Ausführungsbeispiels das Glied 1d relativ zum Glied 1c im Uhrzeigersinn, so erkennt die Steuervorrichtung S das Erreichen des Endanschlags in Richtung Uhrzeigersinn, wenn der zweite Hallsensor 22 in den Wirkbereich des vierten Magneten 34 der Justier- und Überwachungsvorrichtung 20 gerät. Daraufhin erzeugt die Steuervorrichtung S ein Signal, aufgrund dessen der Roboter R die Bewegung des Roboterarm M oder zumindest der Relativbewegung der beiden Glieder 1c, d stoppt.

Dreht sich im Falle des vorliegenden Ausführungsbeispiels das Glied 1d relativ zum Glied 1c gegen Uhrzeigersinn, so erkennt die Steuervorrichtung S das Erreichen des Endanschlags in Richtung gegen den Uhrzeigersinn, wenn der zweite Hallsensor 22 in den Wirkbereich des fünften Magneten 35 der Justier- und Überwachungsvorrichtung 20 gerät. Daraufhin erzeugt die Steuervorrichtung S ein Signal, aufgrund dessen der Roboter R die Bewegung des Roboterarm M oder zumindest der Relativbewegung der beiden Glieder 1c, d stoppt.

Im Falle des vorliegenden Ausführungsbeispiels erstrecken sich der vierte und fünfte Magnet 34, 35 jeweils über einen Winkelbereich von etwa 85°, wodurch jeweils ein Nachlaufweg für das Erkennen der Endanschläge realisiert wird. Des Weiteren erstreckt sich im Falle des vorliegenden Ausführungsbeispiels der fünfte Magnet 35 über einen etwas weiteren Winkelbereich als der vierte Magnet 34. Insbesondere erstreckt sich der fünfte Magnet 35 soweit, dass ein Teil diese Magneten gegenüber dem sechsten Magneten 36 der Justier- und Überwachungsvorrichtung 20 liegt. Da außerdem im Falle des vorliegenden Ausführungsbeispiels die beiden Hallsensoren 21, 22 gegenüberliegend angeordnet sind, kann somit die Funktionstüchtigkeit beider Hallsensoren 21, 22 mittels der Steuervorrichtung S überprüft werden, indem während der Referenzfahrt bei einem Winkel von 90° bezogen auf die Referenzposition P beide Hallsensoren 21, 22 eine Ausgangsspannung von etwa 0,2V liefern sollten.

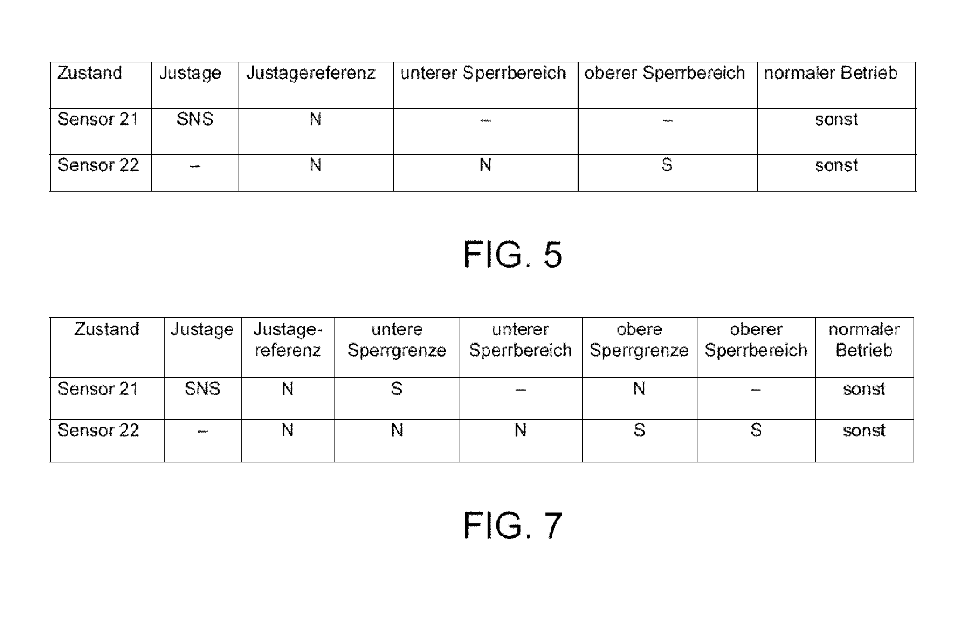

Die Zustände der Hallsensoren 21, 22 sind in einer in der Fig. 5 gezeigten Tabelle zusammengefasst. Dabei beideutet "oberer Sperrbereich" ein Erkennen der maximal erlaubten Drehung des Glieds 1d relativ zum Glied 1c im Uhrzeigersinn und "unterer Sperrbereich" ein Erkennen der maximal erlaubten Drehung des Glieds 1d relativ zum Glied 1c gegen den Uhrzeigersinn.

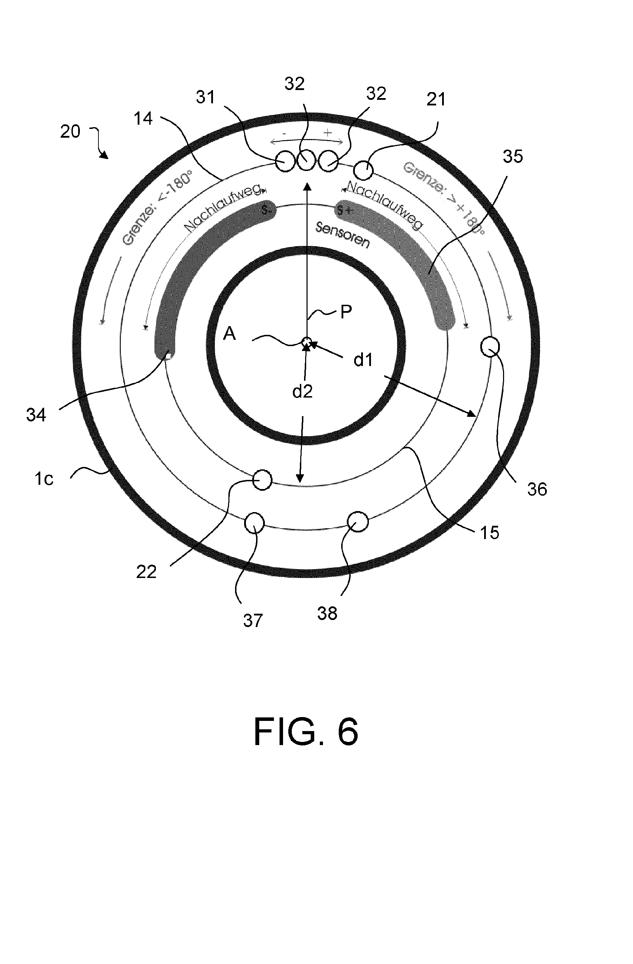

Um den Beginn der maximal erlaubten Drehbewegungen verbessert zu erkennen, kann, wie es in der Fig. 6 gezeigt ist, die Justier- und Überwachungsvorrichtung 20 einen siebten und einen achten Magneten 37, 38 aufweisen, welche im selben Abstand 14 am Glied 1c angeordnet sind wie der erste, zweite und dritte Magnet 31 - 33 und somit mit dem ersten Hallsensor 21 zusammen wirken. In diesem Fall sind die Justier- und Überwachungsfunktionalitäten der Justier- und Überwachungsvorrichtung 20 gekoppelt, wodurch es der Steuervorrichtung S auch ermöglicht wird, die Funktionstüchtigkeit beider Hallsensoren 21, 22 zu überprüfen.

Im Falle des vorliegenden Ausführungsbeispiels ist der siebte Magnet 37 dem Erkennen des Endanschlags im Uhrzeigersinn zugeordnet und gegenüber vom Anfang des vierten Magneten 34 der Justier- und Überwachungsvorrichtung 20 angeordnet. Er ist derart ausgerichtet, dass sein Nordpol in Richtung erster Hallsensor 21 zeigt. Der achte Magnet 38 ist dem Erkennen des Endanschlags gegen den Uhrzeigersinn zugeordnet und gegenüber vom Anfang des fünften Magneten 35 der Justier- und Überwachungsvorrichtung 20 angeordnet. Er ist derart ausgerichtet, dass sein Südpol in Richtung erster Hallsensor 21 zeigt. Somit ergeben sich in einer in der Fig. 7 dargestellten Tabelle zusammen gefasste Zustände der beiden Hallsensoren 21, 22.

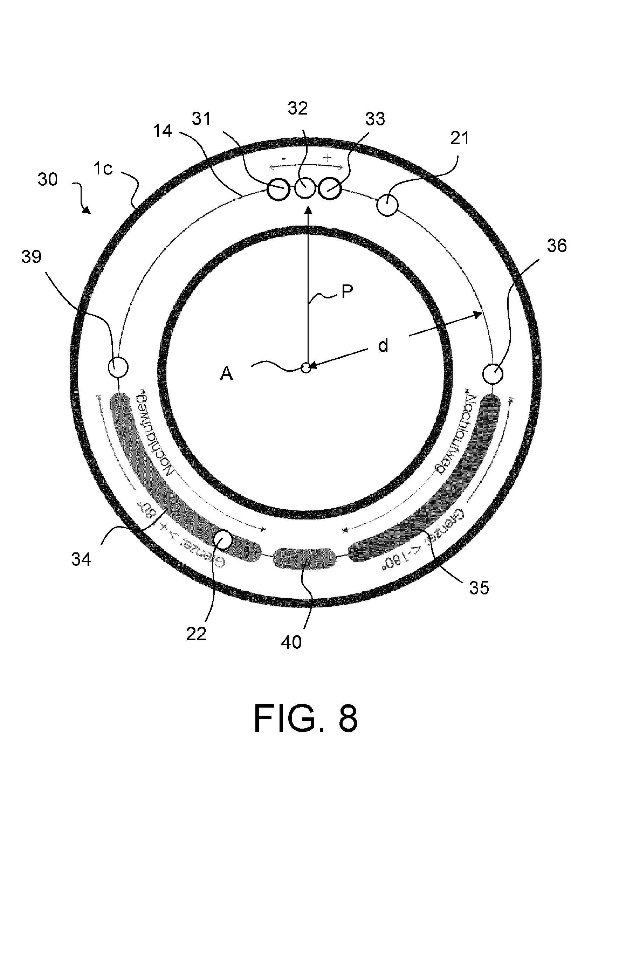

Die Fig. 8 zeigt eine weitere Ausführungsform einer Justier- und Überwachungsvorrichtung 30. Wenn nicht anders beschrieben, dann sind Bestandteile der in der Fig. 8 gezeigten Justier- und Überwachungsvorrichtung 30, die mit Bestandteilen der in der Fig. 3 gezeigten Justier- und Überwachungsvorrichtung 20 im Wesentlichen bau- und funktionsgleich sind, mit denselben Bezugszeichen versehen.

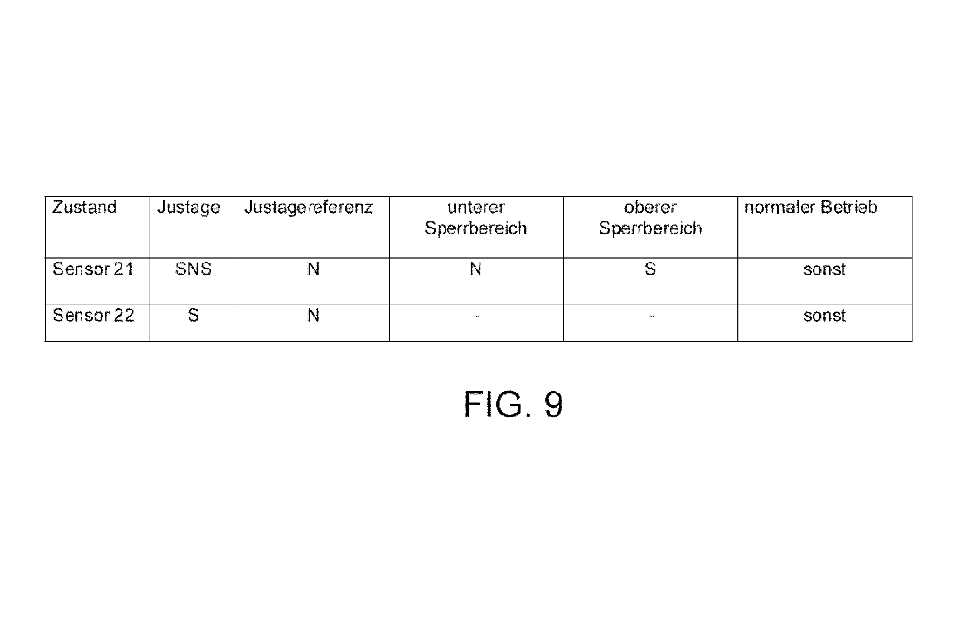

Im Gegensatz zu der in der Fig. 3 gezeigten Justier- und Überwachungsvorrichtung 20 sind alle Magnete der in der Fig. 8 gezeigten Justier- und Überwachungsvorrichtung 30 und die beiden Hallsensoren 21, 22 auf einer gemeinsamen Kreisbahn 14 am Glied 1c angeordnet. Die Fig. 9 zeigt eine Tabelle, die Zustände der beiden Hallsensoren 21, 22 der in der Fig. 8 dargestellten Justier- und Überwachungsvorrichtung 30 zusammenfasst.

Im Falle der in der Fig. 8 gezeigten Justier- und Überwachungsvorrichtung 30 kann diese ebenfalls den optionalen sechsten Magnet 36, der zur Überprüfung der Justierung bzw. des ersten Hallsensors 21 vorgesehen ist, aufweisen. Dieser ist im Falle des vorliegenden Ausführungsbeispiels in einem Winkel von 90° relativ zum zweiten Magneten 32 am Glied 1c auf der gemeinsamen Kreisbahn angeordnet. Zusätzlich kann ein neunter Magnet 39 vorgesehen sein, der gegenüber dem sechsten Magnet 36 am Glied 1c auf der gemeinsamen Kreisbahn angeordnet ist. So kann es vorgesehen sein, dass während der Referenzfahrt die Steuervorrichtung S nur dann auf eine erfolgreiche Bestimmung der Referenzposition P schließt, wenn mittels des ersten Hallsensors 21 der sechste Magnet 36 in einem Winkel von 90° inklusive vorgegebener Toleranz relativ zum zweiten Magneten 32 detektiert wird (Justagereferenz). Da außerdem die beiden Hallsensoren 21, 22 gegenüberliegend am Glied 1d angeordnet sind, kann gleichzeitig die Steuervorrichtung S die Funktionstüchtigkeit des zweiten Hallsensors 22 überprüfen, da dieser sich dann im Wirkbereich des neunten Magneten 39 befindet und demnach bei korrekter Funktionalität eine der Polarität des neunten Magneten 39 entsprechende Ausgangsspannung bzw. ein entsprechendes Ausgangssignal liefert. Im Falle des vorliegenden Ausführungsbeispiels ist der neunte Magnet 39 mit seinem Nordpol in Richtung der Hallsensoren 21, 22 ausgerichtet, sodass der zweiten Hallsensor 22 in etwa eine Ausgangsspannung von 0,2V liefert, sobald er sich im Wirkbereich des neunten Magneten 39 befindet.

Auch die in der Fig. 8 gezeigte Justier- und Überwachungsvorrichtung 30 ist im Falle des vorliegenden Ausführungsbeispiels eingerichtet, einen maximalen Drehbereich der beiden Glieder 1c, d relativ zueinander zu überwachen, damit die Steuervorrichtung S gegebenenfalls die Bewegung der Glieder 1c, d relativ zueinander stoppen kann. Im Falle des vorliegenden Ausführungsbeispiels ist der Drehbereich ebenfalls auf größer 360° beschränkt, also auf größer als ±180° bezogen auf die Referenzposition.

Im Falle des vorliegenden Ausführungsbeispiels sind der vierte und fünfte Magnet 34, 35, mittels derer die Überwachungsfunktionalität der Justier- und Überwachungsvorrichtung 30 realisiert ist, gegenüber dem ersten, zweiten und dritten Magneten 31-33 angeordnet. Im Falle des vorliegenden Ausführungsbeispiels sind der vierte und fünfte Magnete 34, 35 derart am Glied 1c angeordnet, sodass der vierte Magnet 34 mit einem anderen magnetischen Pol in Richtung auf den sich vorbei bewegenden ersten Hallsensor 21 zeigt als der fünfte Magnet 35. Insbesondere sind der vierte und fünfte Magnet 34, 35 derart am Glied 1c angeordnet, sodass der vierte Magnet 34 mit seinem Südpol und der fünfte Magnet 35 mit seinem Nordpol in Richtung auf den sich vorbei bewegenden zweiten Hallsensor 22 zeigt.

Dreht sich im Falle des vorliegenden Ausführungsbeispiels das Glied 1d relativ zum Glied 1c im Uhrzeigersinn, so erkennt die Steuervorrichtung S das Erreichen des Endanschlags in Richtung Uhrzeigersinn, wenn der erste Hallsensor 21 in den Wirkbereich des vierten Magneten 34 der Justier- und Überwachungsvorrichtung 30 gerät. Daraufhin erzeugt die Steuervorrichtung S ein Signal, aufgrund dessen der Roboter R die Bewegung des Roboterarm M oder zumindest die Relativbewegung der beiden Glieder 1c, d stoppt.

Dreht sich im Falle des vorliegenden Ausführungsbeispiels das Glied 1d relativ zum Glied 1c gegen Uhrzeigersinn, so erkennt die Steuervorrichtung S das Erreichen des Endanschlags in Richtung gegen den Uhrzeigersinn, wenn der erste Hallsensor 21 in den Wirkbereich des fünften Magneten 35 der Justier- und Überwachungsvorrichtung 30 gerät. Daraufhin erzeugt die Steuervorrichtung S ein Signal, aufgrund dessen der Roboter R die Bewegung des Roboterarm M oder zumindest die Relativbewegung der beiden Glieder 1c, d stoppt.

Im Falle des vorliegenden Ausführungsbeispiels ist noch ein am Glied 1c angeordneter zehnter Magnet 40 vorgesehen, der gegenüber dem ersten, zweiten und dritten Magneten 31-33 am Glied 1c angeordnet ist und auf der gemeinsamen Kreisbahn 14 angeordnet ist. Seine räumliche Ausdehnung entspricht der gemeinsamen räumlichen Ausdehnung des ersten, zweiten und dritten Magneten 31-33. Der zehnte Magnet 40 ist mit seinem Südpol in Richtung der Hallsensoren 21, 22 ausgerichtet, sodass das Ausgangssignal des zweiten Hallsensors 22 in etwa 0,2V beträgt, wenn sich der erste Hallsensor 21 im Wirkbereich des ersten, zweiten und dritten Magneten 31-33 befindet.

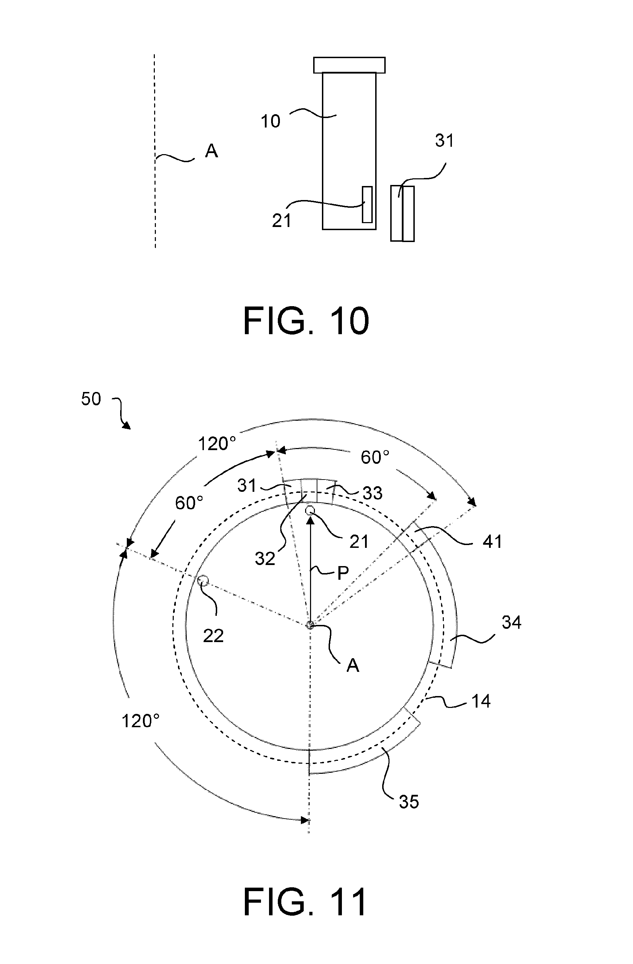

Bei den vorstehend beschriebenen Ausführungsformen sind die Magnete 31-40 und die Hallsensoren 21, 22 stirnseitig an den Gliedern 1c, d angeordnet. Es ist aber auch möglich, dass die Hallsensoren 21, 22 seitlich versetzt zu den Magneten 31-40 angeordnet sind. Dies ist beispielhaft für den ersten Hallsensor 21 und den ersten Magneten 31 in der Fig. 10 gezeigt.

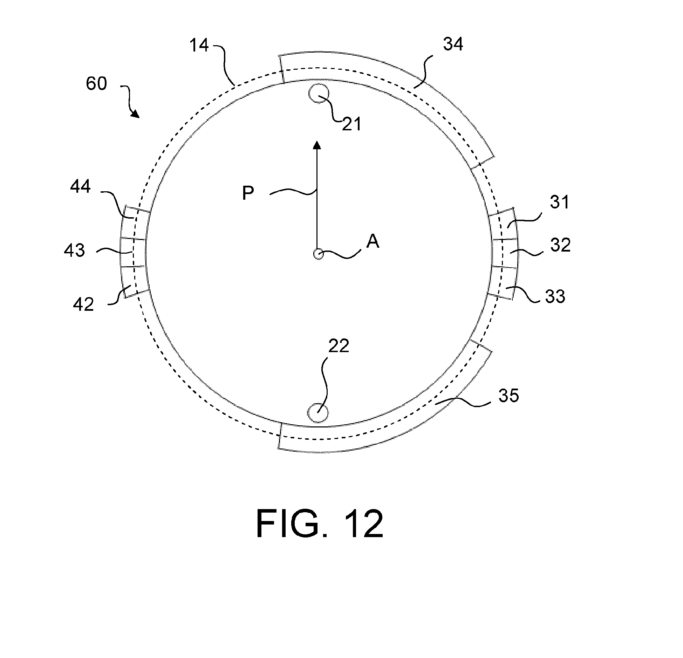

Die Hallsensoren 21, 21 sind z.B. von einem Gehäuse 10 umgeben. Das Gehäuse 10 ist z.B. am Glied 1d befestigt. Die Magnete, z.B. der erste Magnet 31 der Justier- und Überwachungsvorrichtungen 20, 30 liegen mit dem Hallsensor 21 in einer Ebene senkrecht zur Achse A. Der Abstand des Hallsensors 21 zur Achse A unterscheidet sich jedoch von den Abständen der Magnete zur Achse A. Im Falle des in der Fig. 10 gezeigten Ausführungsbeispiels ist der Abstand des ersten Hallsensors 21 zur Achse A kleiner als die Abstände zur Achse A der fraglichen Magnete. Die Figuren 11 und 12 zeigen jeweils Ausführungsformen einer Justier- und Überwachungsvorrichtung, bei der die Magnete und die Hallsensoren 21, 22 entsprechend der Fig. 10 bezüglich der Achse A versetzt angeordnet sind.

Die Fig. 11 zeigt eine weitere Justier- und Überwachungsvorrichtung 50. Wenn nicht anders beschrieben, dann sind Bestandteile der in der Fig. 11 gezeigten Justier- und Überwachungsvorrichtung 50, die mit Bestandteilen der in der Fig. 8 gezeigten Justier- und Überwachungsvorrichtung 30 im Wesentlichen bau- und funktionsgleich sind, mit denselben Bezugszeichen versehen.

Wie bereits erwähnt, sind bei der in der Fig. 11 dargestellten Justier- und Überwachungsvorrichtung 50 die Hallsensoren 21, 22 nicht stirnseitig an den entsprechenden Gliedern 1c, 1d angeordnet, sondern wie in der Fig. 10 gezeigt. Auch sind die beiden Hallssensoren 21, 22 im selben Abstand zur Achse am Glied 1d angeordnet und die Magnete 31-35, 41 sind auf einer gemeinsamen Kreisbahn 14 an Glied 1c angeordnet.

Entsprechend der in der Fig. 8 gezeigten Justier- und Überwachungsvorrichtung 30 sind der erste Hallsensor 21 und der erste, zweite, und dritte Magnet 31-33 der in der Fig. 11 dargestellten Justier- und Überwachungsvorrichtung 50 vorgesehen, im Rahmen einer Referenzfahrt die beiden Glieder 1c, d zu justieren bzw. deren Referenzposition P zu ermitteln. Der vierte und der fünfte Magnet sind für die Überwachung der maximal erlaubten Relativdrehbewegung der beiden Glieder 1c, d vorgesehen.

Im Falle des vorliegenden Ausführungsbeispiels ist die Justier- und Überwachungsvorrichtung 50 eingerichtet, den Drehbereich der beiden Glieder 1c, d relativ zueinander auf einen Winkel kleiner als 360°, insbesondere auf ±120° bezogen auf die Referenzposition P zu beschränken. Des Weiteren wertet die Steuervorrichtung S für die Überwachung der Relativbewegung der beiden Glieder 1c, d relativ zueinander nicht nur die Signale des zweiten Hallsensors 21, sondern auch die Signale des ersten Hallsensors 21 aus.

Im Falle des vorliegenden Ausführungsbeispiels sind die beiden Hallsensoren 21, 22 in einem Winkel von 60° zueinander versetzt am Glied 1d angeordnet, wobei der erste Hallsensor 21 bei einer Drehung im Uhrzeigersinn des Glieds 1d vor dem zweiten Hallsensor 22 läuft. Der vierte und der fünfte Magnet 34, 35 erstrecken sich über einen Winkel von 50°, wobei der vierte Magnet 34 zum zweiten Magnet 32 um einen Winkel von 60° in Richtung Uhrzeigersinn am Glied 1c angeordnet ist. Der fünfte Magnet 35 ist in Richtung Uhrzeigersinn um 20° vom vierten Magneten 34 versetzt. Des Weiteren ist dem vierten Magneten 34 ein elfter Magnet 41 vorgelagert, dessen räumliche Ausdehnung dem ersten Magneten 31 entspricht.

Dreht sich das Glied 1d relativ zum Glied 1c im Uhrzeigersinn, dann erkennt die Steuervorrichtung S eine Drehbegrenzung des Glieds 1d relativ zum Glied 1c, wenn sich der zweite Hallsensor 22 im Wirkbereich eines Südpols und wenn sich der erste Hallsensor 21 im Wirkbereich eines Nordpols befindet oder keinem bzw. nur einem relativ schwachen Magnetfeld ausgesetzt ist. Aufgrund der Anordnung der Magnete 31-35, 41 erkennt somit die Steuervorrichtung S bei einer Drehung im Uhrzeigersinn das Erreichen der maximal zulässigen Relativbewegung, wenn sich der zweite Hallsensor 22 im Wirkbereich des vierten Magneten 34 befindet.

Dreht sich das Glied 1d relativ zum Glied 1c gegen den Uhrzeigersinn, dann erkennt die Steuervorrichtung S eine Drehbegrenzung des Glieds 1d relativ zum Glied 1c, wenn sich der zweite Hallsensor 22 im Wirkbereich eines Nordpols und wenn der erste Hallsensor 21 keinem bzw. nur einem relativ schwachen Magnetfeld ausgesetzt ist. Aufgrund der Anordnung der Magnete 31-35, 41 erkennt somit die Steuervorrichtung S bei einer Drehung gegen den Uhrzeigersinn das Erreichen der maximal zulässigen Relativbewegung, wenn sich der zweite Hallsensor 22 im Wirkbereich des fünften Magneten 35 befindet.

Die Fig. 12 zeigt eine weitere Justier- und Überwachungsvorrichtung 60. Wenn nicht anders beschrieben, dann sind Bestandteile der in der Fig. 12 gezeigten Justier- und Überwachungsvorrichtung 60, die mit Bestandteilen der in der Fig. 11 gezeigten Justier- und Überwachungsvorrichtung 50 im Wesentlichen bau- und funktionsgleich sind, mit denselben Bezugszeichen versehen.

Entsprechend der Justier- und Überwachungsvorrichtung 50 der Fig. 11 ist die in der Fig. 12 gezeigte weitere Justier- und Überwachungsvorrichtung 60 vorgesehen, den Drehbereich der de beiden Glieder 1c, d relativ zueinander auf einen Winkel kleiner als 360°, insbesondere auf ±170° bezogen auf die Referenzposition zu beschränken. Außerdem sind die beiden Hallsensoren 21, 22 im selben Abstand zur Achse A am Glied 1d angeordnet und die Magnete 31-35 am Glied 1c sind auf der gemeinsamen Kreisbahn 14 angeordnet. Dagegen sind die beiden Hallsensoren 21, 22 gegenüberliegend angeordnet.

Der erste, zweite und dritte Magnet 31-33 sowie der erste Hallsensor 21 sind vorgesehen, dass die Steuervorrichtung S im Rahmen der Referenzfahrt die Referenzposition P der beiden Glieder 1c, d wie bereits beschrieben ermittelt. Im Falle des vorliegenden Ausführungsbeispiels ist die Referenzposition jedoch um 90° gegen den Uhrzeigersinn bezüglich des zweiten Magneten versetzt.

Der vierte und der fünfte Magnet 34, 35 erstrecken sich im Falle des vorliegenden Ausführungsbeispiels über 60°. Der vierte Magnet 34 erstreckt sich insbesondere über einen Winkel von 10° gegen den Uhrzeigersinn bezogen auf die Referenzposition P und über einen Winkel von 50° bezogen auf die Referenzposition P im Uhrzeigersinn. Der fünfte Magnet 35 erstreckt sich insbesondere von einem Winkel von 130° bis 190° bezogen auf die Referenzposition P im Uhrzeigersinn.

Dreht sich das Glied 1d relativ zum Glied 1c gegen den Uhrzeigersinn, dann erkennt die Steuervorrichtung S eine Drehbegrenzung des Glieds 1d relativ zum Glied 1c, wenn sich der erste Hallsensor 21 im Wirkbereich eines Nordpols und wenn der zweite Hallsensor 22 keinem bzw. nur einem relativ schwachen Magnetfeld ausgesetzt ist oder sich im Wirkbereich eines Südpols befindet. Aufgrund der Anordnung der Magnete 34, 35, erkennt somit die Steuervorrichtung S bei einer Drehung gegen den Uhrzeigersinn das Erreichen der maximal zulässigen Relativbewegung, wenn sich der erste Hallsensor 21 im Wirkbereich des fünften Magneten 35 befindet.

Dreht sich das Glied 1d relativ zum Glied 1c im Uhrzeigersinn, dann erkennt die Steuervorrichtung S eine Drehbegrenzung des Glieds 1d relativ zum Glied 1c, wenn sich der zweite Hallsensor 22 im Wirkbereich eines Südpols und wenn der erste Hallsensor 21 keinem bzw. nur einem relativ schwachen Magnetfeld ausgesetzt ist oder sich im Wirkbereich eines Nordpols befindet. Aufgrund der Anordnung der Magnete 34, 35, erkennt somit die Steuervorrichtung S bei einer Drehung im Uhrzeigersinn das Erreichen der maximal zulässigen Relativbewegung, wenn sich der zweite Hallsensor 22 im Wirkbereich des vierten Magneten 34 befindet.

Damit die Steuervorrichtung S nicht auf ein Erreichen der maximal zulässigen Relativbewegung schließt, wenn sich der erste Hallsensor 21 im Wirkbereich des zweiten Magneten 32 oder der erste Hallsensor im Wirkbereich des ersten oder dritten Magneten 31, 33 befindet, sind im Falle des vorliegenden Ausführungsbeispiels ein 12. 13. und 14. Magnet 42-44 vorgesehen, die gegenüber dem ersten, zweiten und dritten Magneten 31-33 am Glied 1c auf der gemeinsamen Kreisbahn 14 angeordnet, wie die restlichen Magnete 31-35 der Justier- und Überwachungsvorrichtung 60. Insbesondere ist dem zweiten Magneten 32 der 13. Magnet 43 gegenüber liegend angeordnet und ist mit seinem Nordpol den Hallsensoren 21, 22 zugewandt. Dem ersten und dritten Magneten 31, 33 sind der 12. und 14. Magnet gegenüberliegend angeordnet. Diese sind mit ihren Südpolen den Hallsensoren 21, 22 zugewandt.

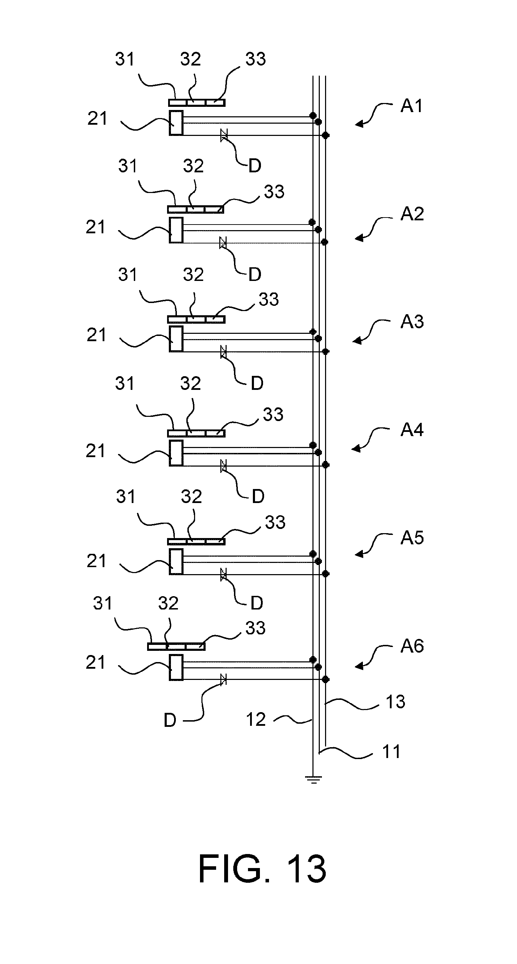

Wenn mehrere Achsen A des Roboters R mit einer der Justier- und Überwachungsvorrichtung 20, 30, 50, 60 ausgestattet sind oder zumindest mit einer Justiervorrichtung, welche den ersten Hallsensor 21 und den ersten, zweiten und dritten Magneten 31-33 aufweist, dann können die einzelnen Hallsensoren 21 entsprechend einer in der Fig. 13 gezeigten Schaltung verschaltet sein.

Im Falle des in der Fig. 13 gezeigten Ausführungsbeispiels sind sechs Achsen A1-A6 des Roboters R jeweils eine Justiervorrichtung zugeordnet, welche jeweils einen ersten Hallsensor 21 und jeweils einen ersten, zweiten und dritten Magneten 31-33 aufweist.

Im Falle des vorliegenden Ausführungsbeispiels werden die ersten Hallsensoren 21 von einer gemeinsamen Versorgungsspannung über eine gemeinsame elektrische Leitung 11 versorgt. Die Versorgungsspannung beträgt z.B. 5V. Außerdem sind die ersten Hallsensoren 21 mittels einer weiteren gemeinsamen elektrischen Leitung 12 mit Masse verbunden. Die Ausgangssignale aller erster Hallsensoren 21 liegen an einer weiteren gemeinsamen Leitung 13 an, die mit der Steuervorrichtung S für eine Auswertung verbunden ist. Um eine Beeinflussung der einzelnen ersten Hallsensoren 21 untereinander zu vermeiden oder zumindest zu reduzieren, ist zwischen den jeweiligen ersten Hallsensoren 21 und der Leitung 13 für die Ausgangssignale jeweils eine Diode D in Durchlassrichtung geschaltet. Die Dioden sind insbesondere Schottky Dioden.

Um nun die einzelnen, den Achsen A1-A6 zugeordneten Glieder der Roboterarms M zu justieren, steuert im Falle des vorliegenden Ausführungsbeispiels zunächst die Steuervorrichtung S die Antriebe des Roboters R derart an, dass alle erste Hallsensoren 21 sich im Wirkbereich ihrer ersten Magnete 31 befinden. Es ist auch möglich, dass der Roboterarm M, gesteuert durch die Steuervorrichtung S, derart ausgerichtet wird, sodass die ersten Hallsensoren 21 sich jeweils im Wirkbereich der dritten Magnete 33 befinden. Zumindest wird jedoch der Roboterarm M derart bewegt, sodass sich diejenigen erste Hallsensoren 21 entweder im Wirkbereich ihrer ersten oder dritten Magnete 31, 33 befinden, deren Achsen bzw. deren zugeordnete Glieder aktuell nicht justiert werden. Dies sind im Falle des vorliegenden Ausführungsbeispiels die Achsen A1-A5.

Anschließend steuert die Steuervorrichtung S diejenigen Glieder an, die justiert werden sollen. Im Falle des vorliegenden Ausführungsbeispiels sind dies die der Achse A6 zugeordneten Glieder. Die Justierung der fraglichen Glieder erfolgt wie obenstehend bereits beschrieben.

Danach werden die restlichen Achsen A1-A5 bzw. deren zugeordnete Glieder justiert, wobei für die entsprechende Justierung die den nicht beteiligten Achsen zugeordneten erste Hallsensoren 21 in den Wirkbereich ihrer ersten oder dritten Magnete 31, 33 gebracht werden.

## Patentansprüche

1. Maschine, aufweisend ein erstes Glied (1c), ein relativ zum ersten Glied (1c) bezüglich einer Achse (A) drehbares zweites Glied (1c), eine Steuervorrichtung (S), einen mit der Steuervorrichtung (S) verbundenen Antrieb zum Bewegen der beiden Glieder (1c, 1d) relativ zueinander, einen mit der Steuervorrichtung (S) verbundenen und am ersten Glied (1c) angeordneten ersten Hallsensor (21), und einen ersten, zweiten und dritten Magneten (31-33), die nebeneinander derart am zweiten Glied (1d) auf einer gemeinsamen Kreisbahn (14) angeordnet sind, dass bei einer Drehung der beiden Glieder (1c, 1d) relativ zueinander der erste Hallsensor (21) sich bei einer bestimmten Position (P) im Wirkbereich der Magnete (31-33) befindet, wobei der als mittlere Magnet ausgebildete zweite Magnet (32) mit einem anderen magnetischen Pol dem ersten Hallsensor (21) zugewandt ist als der erste und dritte Magnet (31, 33).

2. Maschine nach Anspruch 1, bei der der zweite Magnet (32) im Wirkbereich mit seinem Nordpol und der erste und dritte Magnet (31, 33) im Wirkbereich mit ihren Südpolen dem ersten Hallsensor (21) zugewandt sind.

3. Maschine nach Anspruch 1 oder 2, deren Steuervorrichtung (S) eingerichtet ist, im Rahmen einer Referenzfahrt den Antrieb derart anzusteuern, sodass sich die beiden Glieder (1c, 1d) relativ zueinander drehen, und aufgrund der von dem ersten Hallsensor (21) stammenden Signale die Position (P) zu bestimmen.

4. Maschine nach Anspruch 3, bei der die Größe des Signals des ersten Hallsensors (21) sich erhöht und somit eine steigende Signalflanke aufweist, sobald der erste Hallsensor (21) in den Wirkbereich des zweiten Magneten (32) gerät, und die Größe des Signals des ersten Hallsensors (21) sinkt und somit eine fallende Signalflanke aufweist, sobald der erste Hallsensor (21) den Wirkbereich des zweiten Magneten (32) wieder verlässt.

5. Maschine nach Anspruch 3, bei der die Größe des Signals des ersten Hallsensors (21) sinkt und somit eine fallende Signalflanke aufweist, sobald der erste Hallsensor (21) in den Wirkbereich des zweiten Magneten (32) gerät, und die Größe des Signals des ersten Hallsensors (21) steigt und somit eine steigende Signalflanke aufweist, sobald der erste Hallsensor (21) den Wirkbereich des zweiten Magneten (32) wieder verlässt.

6. Maschine nach Anspruch 4 oder 5, deren Steuervorrichtung (S) eingerichtet ist, für die Bestimmung der Position (P) die steigende und die fallende Signalflanke des Signals des ersten Hallsensors (21) auszuwerten, insbesondere eingerichtet ist, den Zeitpunkt (t1) zu erkennen, wenn die Größe der steigende Signalflanke einen vorgegebenen Schwellenwert überschreitet und den Zeitpunkt (t2) zu erkennen, wenn die Größe der fallenden Signalflanke den vorgegebenen Schwellenwert unterschreitet, und insbesondere den Mittelwert (tx) dieser beiden Zeitpunkte (t1, t2) zu ermitteln, um aufgrund des Mittelswertes (tx) auf die Referenzposition (P) zu schließen.

7. Maschine nach einem der Ansprüche 1 - 6, die als Roboter (R) ausgebildet ist, der einen Roboterarm (M) mit mehreren, nacheinander angeordneten Gliedern (1a-g) aufweist, die gesteuert durch die Steuervorrichtung (S) mittels Antriebe relativ zueinander bezüglich Achsen (A) drehbar sind und zumindest zwei dieser Achsen (A) jeweils ein erster Hallsensor (21) und jeweils ein erster, zweiter, und dritter Magnet (31-33) zugeordnet sind, die an entsprechenden, den fraglichen Achsen (A) zugeordneten Gliedern (1a-1f) angeordnet sind, wobei die ersten Hallsensoren (21) an einer gemeinsamen Leitung (13) angeschlossen sind, an der die von den ersten Hallsensoren (21) erzeugten Signale anliegen.

8. Maschine nach Anspruch 7, aufweisend elektrische Ventile, insbesondere Dioden (D), von denen jeweils eines insbesondere in Durchlassrichtung zwischen den einzelnen erstens Hallsensoren (21) und der gemeinsamen Leitung (13) geschaltet ist.

9. Maschine nach Anspruch 7 oder 8, deren Steuervorrichtung (S) eingerichtet ist, zumindest diejenigen Glieder (1a-1f), deren Positionen (P) die Steuervorrichtung (S) aktuell nicht ermittelt, derart zu bewegen, sodass sich die entsprechenden ersten Hallsensoren (21) im Wirkbereich ihrer jeweiligen ersten oder dritten Magnete (31, 33) befinden, und anschließend im Rahmen einer Referenzfahrt diejenigen Glieder (1c, 1d) relativ zueinander zu drehen, deren zugeordnete Position (P) bestimmt werden soll, und aufgrund der von dem fraglichen ersten Hallsensor (21) stammenden Signale die entsprechende Position (P) zu bestimmen.

10. Maschine, aufweisend ein erstes Glied (1c), ein relativ zum ersten Glied (1c) bezüglich einer Achse (A) drehbares zweites Glied (1c), eine Steuervorrichtung (S), einen mit der Steuervorrichtung (S) verbundenen Antrieb zum Bewegen der beiden Glieder (1c, 1d) relativ zueinander, wenigstens einen mit der Steuervorrichtung (S) verbundenen und am ersten Glied (1c) angeordneten, insbesondere als einen zweiten Hallsensor (22) ausgeführten berührungslosen Sensor (22), welcher bei einer maximal vorgegebenen Relativdrehung der beiden Glieder (1c, d) ein für die Steuervorrichtung bestimmtes Signal erzeugt.

11. Maschine nach Anspruch 10, deren Steuervorrichtung (S) eingerichtet ist, die vom berührungslosen Sensor (22) stammenden Signale auszuwerten und aufgrund der ausgewerteten Signale die Relativbewegung der beiden Glieder (1c, d) zu stoppen.

12. Maschine nach Anspruch 10 oder 11, aufweisend einen vierten Magneten (34), der derart am zweiten Glied (1d) angeordnet ist, dass bei einer Drehung in einer ersten Drehrichtung der beiden Glieder (1c, 1d) relativ zueinander der zweite Hallsensor (22) sich bei einer ersten maximal erlaubten Relativbewegung der beiden Glieder (1c, d) im Wirkbereich des vierten Magneten (34) befindet, und aufweisend einen fünften Magneten (35), der derart am zweiten Glied (1d) angeordnet ist, sodass bei einer Drehung in einer der ersten Drehrichtung entgegen gesetzten Drehrichtung der beiden Glieder (1c, 1d) relativ zueinander der zweite Hallsensor (22) oder eine weiterer, am ersten Glied (1c) und mit der Steuervorrichtung (S) verbundener weiterer Hallsensor (21) sich bei einer zweiten maximal erlaubten Relativbewegung der beiden Glieder (1c, d) im Wirkbereich des fünften Magneten (35) befindet.

13. Maschine nach Anspruch 12, bei der der vierte Magnet (34) einem anderen magnetischen Pol dem zweiten Hallsensor (22) zugewandt ist als der fünfte Magnet (35).

14. Maschine nach Anspruch 12 oder 13, aufweisend einen weiteren Magneten (33), der derart am zweiten Glied (1d) angeordneten ist, dass bei einer Drehung der beiden Glieder (1c, 1d) relativ zueinander der weitere Hallsensor (21) sich bei einer bestimmten Referenzposition (P) im Wirkbereich des weiteren Magneten (32) befindet und die Steuervorrichtung (S) eingerichtet ist, im Rahmen einer Referenzfahrt den Antrieb derart anzusteuern, sodass sich die beiden Glieder (1c, 1d) relativ zueinander drehen und aufgrund der von dem weiteren Hallsensor (21) stammenden Signale die Referenzposition (P) zu bestimmen.

15. Maschine nach einem der Ansprüche 12 bis 14, bei der alle Magnete (32, 34, 35) auf derselben Kreisbahn (14) am zweiten Glied (1d) angeordnet sind.
